# FASCICULE DE BREVET EUROPEEN

(11) **EP 3 257 755 B1**
(45) Date de publication et mention de la délivrance du brevet: **23.01.2019**
(21) Numéro de dépôt: 17175304.9
(22) Date de dépôt: 09.06.2017
(51) Int. Cl.: B64F 5/10

(54) **PROCEDE DE REGLAGE DU POSITIONNEMENT D'ELEMENTS D'UNE STRUCTURE D'UN AERONEF ET DISPOSITIF POUR SA MISE EN OEUVRE**
VERFAHREN ZUR REGULIERUNG DER POSITIONIERUNG VON ELEMENTEN EINER LUFTFAHRZEUGSTRUKTUR, UND VORRICHTUNG FÜR DESSEN UMSETZUNG
METHOD FOR ADJUSTING THE POSITIONING OF ELEMENTS OF A STRUCTURE OF AN AIRCRAFT AND DEVICE FOR IMPLEMENTING SAME

(30) Priorité: 13.06.2016 FR 1655419
(43) Date de publication de la demande: 20.12.2017
(73) Titulaire: Airbus Operations S.A.S., 31060 Toulouse (FR)
(72) Inventeur: BRETON, Jean-Marc, 44210 PORNIC (FR); BRY, Jean-Christophe, 44750 CAMPBON (FR); MIGNE, Janick, 44600 SAINT NAZAIRE (FR); SERRANO, Laurent, 44610 INDRE (FR)
(74) Mandataire: Gicquel, Olivier Yves Gérard

(56) Documents cités:
- WO-A1-97/14015
- FR-A1- 3 029 897
- US-A1- 2012 303 336

## Description

La présente demande se rapporte à un procédé de réglage du positionnement d'éléments d'une structure d'un aéronef et à un dispositif pour sa mise en oeuvre.

Le document WO 97/14015 A1 divulgue un procédé et un dispositif pour la détermination d'une position réelle d'un élément d'une structure. Par le documents US 2012/0303336 A1, il est en outre connu de comparer une telle position réelle à une position virtuelle.

Un fuselage d'un aéronef comprend d'une part une structure primaire qui comporte des raidisseurs tels que des cadres et des lisses et une peau rapportée sur les raidisseurs, et d'autre part, une structure secondaire qui comporte des parois, des cloisons, des coffres ou autres qui sont reliés à la structure primaire. A cet effet, la structure primaire comprend des supports auxquels sont reliées les différentes parties de la structure secondaire. Pour que les parties de la structure secondaire soient correctement positionnées dans le fuselage, il est nécessaire que les supports soient eux même correctement positionnés. Ainsi, chaque support doit occuper une position réelle dans un référentiel aéronef conforme à une position théorique déterminée lors de la conception de l'aéronef.

Or, à l'issue de l'assemblage de la structure primaire, certains supports occupent une position réelle dans le référentiel aéronef différente de la position théorique. Par conséquent, le procédé d'assemblage d'un aéronef comprend au moins une phase de réglage du positionnement de ces supports afin de faire coïncider la position réelle de chacun d'eux avec la position théorique.

Selon un mode opératoire connu, un dispositif de mesure de type laser de poursuite est positionné dans le fuselage, plus particulièrement dans une passerelle, à l'arrière du fuselage. Ce laser de poursuite est configuré pour mesurer la position réelle de chaque élément dans le référentiel aéronef. Chaque élément est pointé pour déterminer sa position réelle dans le référentiel avion et, si la position réelle mesurée n'est pas conforme à la position théorique, le positionnement de l'élément mesuré est corrigé grâce aux valeurs indiquées par le laser de poursuite. Ainsi, les étapes de mesure de la position réelle et de réglage du positionnement sont réalisées avec le même dispositif de mesure et répétées pour chaque élément structurel.

Cette phase de réglage est donc relativement longue, supérieure à 10 heures, ce qui impacte la cadence d'assemblage des aéronefs.

Pour réduire la durée de cette phase de réglage, une solution consiste à utiliser deux lasers de poursuite positionnés à chaque extrémité du tronçon du fuselage de manière à scinder le tronçon du fuselage en deux zones de travail, dans chacune desquelles travaille un opérateur. Ainsi, un premier opérateur règle le positionnement de certains éléments avec un premier laser de poursuite alors qu'un second opérateur règle le positionnement d'autres éléments avec un second laser de poursuite.

Cette solution n'est pas satisfaisante car elle requiert l'utilisation de deux lasers de poursuite qui sont des appareils nécessitant des conditions d'utilisation très stables. Il est notamment nécessaire qu'aucune vibration ne se produise dans la zone de travail pendant le réglage. De plus, l'usage de deux lasers de poursuite n'est pas une solution simple à mettre en oeuvre, notamment à la frontière des zones de travail. Enfin, comme précédemment, chaque opérateur doit successivement mesurer et éventuellement corriger le positionnement de chaque élément structurel.

La présente invention vise à remédier aux inconvénients de l'art antérieur.

A cet effet, l'invention a pour objet un dispositif de réglage du positionnement d'éléments structurels d'une structure d'un aéronef comportant les caractéristiques de la revendication 1.

Pour ajuster de manière automatique le positionnement des éléments structurels le dispositif coopère en outre avec des moyens de positionnement automatisés.

Pour informer un opérateur de la manière dont l'élément structurel considéré est à déplacer, le dispositif comporte une interface de restitution pour restituer les valeurs de réglages. Ainsi l'opérateur est à même de modifier manuellement le positionnement de l'élément structurel ou de suivre l'évolution d'un positionnement automatisé.

Selon un mode de réalisation de l'invention l'interface homme machine de restitution est un écran.

Afin de positionner et d'orienter le au moins un capteur de mesure de façon adéquate autour de l'élément structurel, l'outil de réglage comprend un support sur lequel est fixé le au moins un capteur de mesure et un système de liaison démontable permettant de relier ledit support à la structure, ledit capteur de mesure pointant en direction de l'élément structurel.

Lorsque l'outil de réglage comporte au moins deux capteurs de mesure, chaque capteur de mesure peut être fixé sur le support de manière à ce que la direction de mesure de chaque capteur de mesure soit non parallèle et non sécante à l'axe de rotation de l'orientation de réglage d'un élément structurel.

Pour couvrir une structure de grande taille, l'outil de mesure peut comporter deux couples d'appareils de prise de vue.

Selon un mode de réalisation de l'invention, le capteur de mesure est un capteur opto-électrique.

L'invention a également pour objet un procédé de réglage du positionnement d'éléments structurels d'une structure d'un aéronef mis en oeuvre par le dispositif de réglage du positionnement d'éléments structurels d'une structure d'un aéronef. Ledit procédé comprend les étapes de la revendication 8.

Le positionnement des éléments structurels peut en outre être automatisé, le procédé peut dès lors comporter une étape de transmission des valeurs de réglages à des moyens de positionnement automatisés.

Selon une variante avantageuse le procédé peut comporter une étape d'élaboration d'un rapport des opérations de réglages, lorsque les valeurs mesurées par le ou les capteur(s) de mesure sont conformes aux valeurs de réglages déterminées et/ou une étape de restitution de la valeur de réglage et/ou le rapport des opérations de réglages par une interface homme-machine de restitution (38).

D'autres caractéristiques et avantages ressortiront de la description qui va suivre de l'invention, description donnée à titre d'exemple uniquement, en regard des dessins annexés sur lesquels :
- La figure 1 est une vue en perspective d'un tronçon de fuselage,
- La figure 2 est une section du tronçon de fuselage de la figure 1,
- La figure 3 est une coupe longitudinale du tronçon de fuselage de la figure 1,
- La figure 4 est un schéma d'un outil de réglage qui illustre un mode de réalisation de l'invention,
- Les figures 5 à 9 sont des schémas d'outils de réglage qui illustrent des modes de réalisation de l'invention,
- La figure 10 est un synoptique du procédé de réglage qui illustre l'invention.

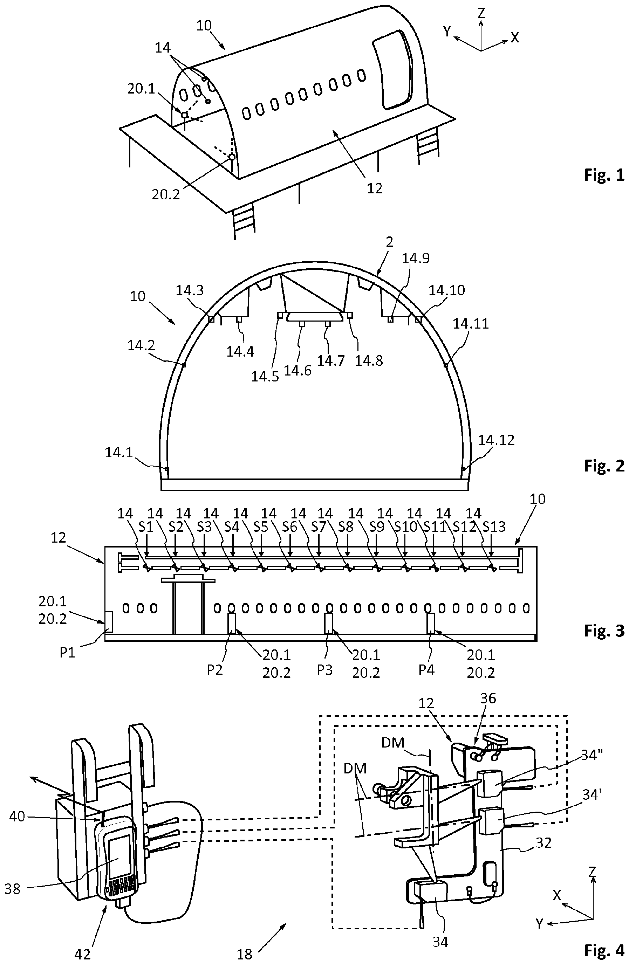

Sur les figures 1 à 3, on a représenté un tronçon d'un fuselage 10 qui comprend une structure 12 qui comporte des éléments structurels 14 dont la position doit être ajustée.

Ces éléments structurels 14 sont positionnés dans un référentiel aéronef XYZ.

Selon une configuration, le référentiel aéronef comprend trois axes orthonormés X, Y, Z, l'axe X étant parallèle à la longueur du tronçon du fuselage, l'axe Y étant perpendiculaire à l'axe X et horizontal, l'axe Z étant perpendiculaire à l'axe X et vertical.

Chaque élément structurel 14 occupe une position réelle dans le référentiel aéronef XYZ qui doit être conforme à une position théorique déterminée lors de la conception de l'aéronef. Ainsi, la position réelle ou théorique de chaque élément structurel 14 est déterminée par au moins une valeur réelle ou théorique dans le référentiel aéronef XYZ. Cette valeur réelle ou théorique peut être une distance, un angle,...

Selon une configuration, dans le référentiel aéronef XYZ, la position réelle (ou théorique) d'un élément structurel 14.1 est déterminée par une première valeur X1 réelle (ou théorique), une deuxième valeur Y1 réelle (ou théorique) et une troisième valeur Z1 réelle (ou théorique). Les valeurs théoriques des positions théoriques de chaque élément structurel sont répertoriées dans une première base de données 15. Selon un mode de réalisation, pour la position théorique de chaque élément structurel 14, la première base de données comprend trois valeurs Xth, Yth, Zth.

Selon une application, les éléments structurels 14 sont positionnés à l'intérieur du tronçon de fuselage 10 et sont des supports d'une structure primaire utilisés pour fixer des parties d'une structure secondaire à la structure primaire.

Selon une configuration visible sur la figure 3, la structure 12 du tronçon du fuselage 10 comprend plusieurs sections S1 à S13 comprenant au moins un élément structurel 14. Comme illustré sur la figure 2, chaque section S1 à S13 comprend plusieurs éléments structurels 14.1 à 14.12.

A titre d'exemple, le tronçon de fuselage 10 comprend cent soixante éléments structurels.

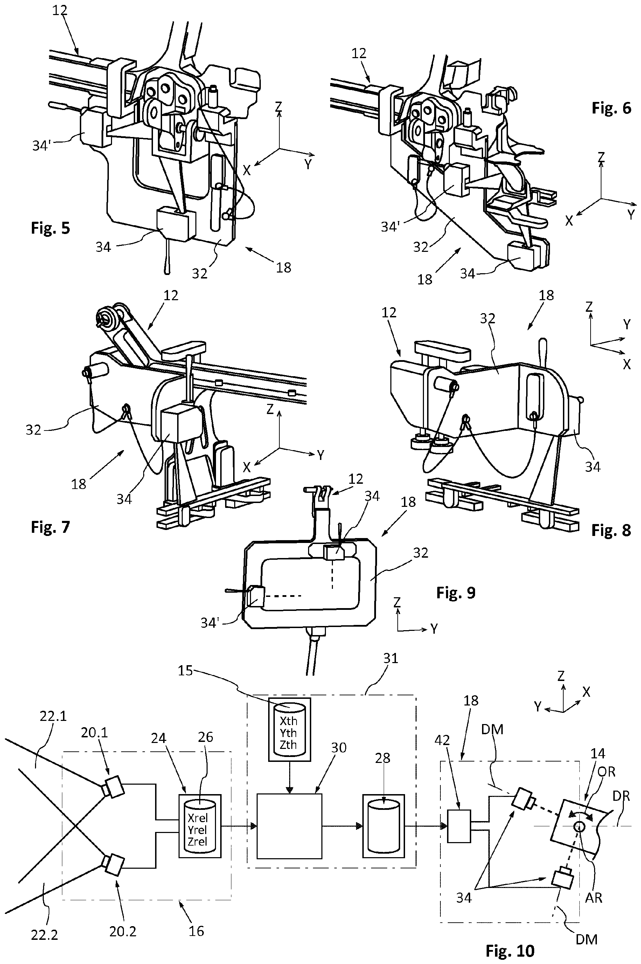

Comme illustré sur la figure 10, la position de chaque élément structurel 14 peut être ajustée selon au moins une direction de réglage D_{R} dans le référentiel aéronef XYZ et/ou selon au moins une orientation de réglage O_{R} qui correspond à une rotation autour d'un axe de rotation A_{R}. La direction D_{R} et l'axe de rotation A_{R} comprennent chacun au moins une composante selon l'axe X, selon l'axe Y et/ou selon l'axe Z.

Pour certains éléments structurels 14, la direction D_{R} est contenue dans un plan transversal (perpendiculaire à l'axe X).

Le procédé de réglage du positionnement des éléments structurels 14 de la structure 12 comprend :
- une première étape de mesure des positions réelles des éléments structurels 14,
- une deuxième étape de détermination pour chaque élément structurel 14 d'au moins une valeur de réglage à partir de la position réelle mesurée et de sa position théorique, et
- une troisième étape de réglage de chaque élément structurel 14 en fonction de la valeur de réglage déterminée.

Selon une particularité de l'invention, les étapes de mesure de la position réelle et de réglage sont dissociées. Lors de la première étape, les positions réelles de tous les éléments structurels 14 sont mesurées avec un outil de mesure 16. Lors de la troisième étape, tous les éléments structurels 14 sont réglés tour à tour avec des outils de réglage 18.

La première étape de mesure des positions réelles des éléments structurels 14 est réalisée par photogrammétrie.

A cet effet, l'outil de mesure 16 comprend au moins un couple d'appareils de prise de vue 20.1 et 20.2 positionnés dans le référentiel aéronef XYZ de manière à ce que leurs champs de vision 22.1 et 22.2 soient chevauchants et un système d'analyse 24 des vues prises par le couple d'appareils de prise de vue 20.1 et 20.2. Pour chaque couple, les appareils de prise de vue 20.1 et 20.2 sont configurés pour permettre une mesure par photogrammétrie.

Selon un mode de réalisation, l'outil de mesure 16 comprend deux couples d'appareils de prise de vue 20.1, 20.2. Le nombre de couples d'appareils de prise de vue dépend notamment des dimensions de la structure 12, de la précision exigée ainsi que du temps alloué à la mesure et au réglage des éléments structurels.

Chaque appareil de prise de vue 20.1, 20.2 est positionné dans le référentiel aéronef XYZ selon au moins une position de référence.

Selon un premier mode opératoire, une seule prise de vue de chaque appareil de prise de vue 20.1 et 20.2 est suffisante pour mesurer les positions réelles de tous les éléments structurels 14. Dans ce cas, chaque appareil de prise de vue 20.1 et 20.2 est positionné selon une unique position de référence.

Selon un autre mode opératoire, plusieurs prises de vue sont nécessaires pour mesurer les positions réelles de tous les éléments structurels 14. Dans ce cas, chaque appareil de prise de vue 20.1 et 20.2 est positionné successivement selon plusieurs positions de référence.

Pour donner un ordre de grandeur, il convient de prévoir environ 10 secondes pour chaque prise de vue et environ 5 minutes pour installer les appareils de prise de vue 20.1 et 20.2.

A titre indicatif, pour un tronçon de fuselage, il convient de prévoir quatre prises de vue pour chaque appareil 20.1 et 20.2 pour mesurer la position réelle des éléments structurels 14 positionnés sur les treize sections. Ainsi, chaque appareil de prise de vue 20.1 et 20.2 est positionné selon quatre positions de référence P1 à P4, comme illustré sur la figure 3.

Le système d'analyse 24 est configuré pour générer, à partir des prises de vue et des positions de référence des appareils de prise de vue 20.1 et 20.2, une deuxième base de données 26 contenant pour chaque élément structurel 14 au moins une valeur pour sa position réelle dans le référentiel aéronef XYZ. Selon un mode de réalisation, pour la position réelle de chaque élément structurel, la deuxième base de données 26 comprend trois valeurs Xrel, Yrel et Zrel.

A cet effet, le système d'analyse 24 comprend un logiciel configuré pour déterminer au moins une valeur pour la position réelle de chaque élément structurel à partir des vues prises par les appareils de prise de vue 20.1 et 20.2.

Pour simplifier la détermination des valeurs de la position réelle dans le référentiel aéronef XYZ des éléments structurels 14, au moins un élément structurel 14 est équipé d'un réflecteur. A titre d'exemple, ce réflecteur est positionné sur l'élément structurel par un système de serrage magnétique ou élastique.

Selon une variante de réalisation, la première étape de photogrammétrie est précédée d'une étape préparatoire, préalablement aux prises de vue par les appareils de prise de vue 20.1 et 20.2, qui consiste à mesurer des points solidaires de la structure 12, fixes dans le référentiel aéronef XYZ qui seront identifiables dans les vues prises ultérieurement. Selon un mode de réalisation, les mesures de l'étape préparatoire sont réalisées à l'aide d'un dispositif de mesure de type laser de poursuite. Les points mesurés peuvent être des éléments structurels 14.

Lors de la deuxième étape de détermination des valeurs de réglage, chaque valeur réelle mesurée est comparée à la valeur théorique correspondante, pour chaque élément structurel 14. Si la valeur réelle mesurée est différente de la valeur théorique correspondante, une valeur de réglage est déterminée. Selon une configuration, cette valeur de réglage est égale à la différence entre la valeur réelle mesurée et la valeur théorique.

A l'issue de cette deuxième étape, une troisième base de données 28 contenant les valeurs de réglage déterminées est constituée.

En plus de l'outil de mesure 16 et des outils de réglage 18, le dispositif de mesure et de réglage permettant la mise en oeuvre du procédé selon l'invention comprend un système de traitement et de calcul 30 qui comprend un logiciel configuré pour comparer chaque valeur réelle mesurée à la valeur théorique correspondante et pour en déduire une valeur de réglage.

Ce système de traitement et de calcul 30 est un ordinateur 31 qui peut également assurer la fonction du système d'analyse 24. Cet ordinateur 31 peut également assurer le stockage des trois bases de données 15, 26 et 28.

Comme illustré sur la figure 4, chaque outil de réglage 18 comprend un support 32, au moins un capteur de mesure 34 fixé sur le support 32 et pointé en direction de l'élément structurel 14 ainsi qu'un système de liaison démontable 36 permettant de relier ledit support 32 à la structure 12.

Selon un mode de réalisation, le système de liaison démontable 36 comprend des trous de passage traversant le support et des vis qui traversent le support 32 via les trous de passage et qui se vissent dans des alésages prévus dans la structure 12. D'autres solutions sont envisageables pour le système de liaison démontable 36. Dans tous les cas, le système de liaison démontable 36 est configuré pour fixer de manière temporaire le support 32 sur la structure 12 et le rendre immobile dans le référentiel aéronef XYZ.

Selon un mode de réalisation, chaque capteur de mesure 34 est un capteur optoélectronique. Contrairement à un laser de poursuite, un capteur de mesure 34 est configuré pour mesurer une distance sur une faible portée, de l'ordre de quelques centimètres. Ainsi, il est possible d'utiliser simultanément dans un espace confiné plusieurs outils de réglage 18 et ainsi ajuster en même temps la position de plusieurs éléments structurels 14.

Le capteur de mesure 34 est configuré pour mesurer, selon une direction de mesure D_{M}, une variation de la distance séparant ledit capteur de mesure 34 et l'élément structurel 14.

Selon certains modes de réalisation visibles sur les figures 4, 5 6, 9, le support 32 est une plaque plane disposée en fonctionnement dans un plan transversal (perpendiculaire à l'axe X).

Selon d'autres modes de réalisation visibles sur les figures 8 et 9, le support est une plaque pliée en forme de L avec, en fonctionnement, une première aile disposée dans un plan perpendiculaire à l'axe X et une seconde aile disposée dans un plan perpendiculaire à l'axe Y. Dans le cas d'un élément structurel avec au moins une direction de réglage D_{R}, le support 32 a une géométrie adaptée et chaque capteur de mesure est fixé sur le support 32 de manière à ce que la direction de mesure D_{M} de chaque capteur de mesure 34 soit orientée parallèlement à une composante d'une des directions de réglage D_{R} de l'élément structurel 14.

De préférence, le support 32 a une géométrie adaptée et chaque capteur de mesure est fixé sur le support 32 de manière à ce que la direction de mesure D_{M} du capteur de mesure 34 soit confondue avec l'une des directions de réglage D_{R} de l'élément structurel.

Dans le cas d'un élément structurel avec au moins une orientation de réglage O_{R}, le support a une géométrie adaptée et chaque capteur de mesure est fixé sur le support 12 de manière à ce que la direction de mesure D_{M} de chaque capteur de mesure 34 soit non parallèle, de préférence perpendiculaire, et non sécante à l'axe de rotation A_{R} de l'orientation de réglage O_{R}.

Selon un premier mode de réalisation visible sur la figure 4, le support 32 comprend une plaque plane en L avec trois capteurs de mesure 34, 34', 34" dont les directions de mesure sont disposées dans un plan transversal, un premier capteur de mesure 34 avec une direction de mesure parallèle à l'axe Z et deux capteurs de mesure 34', 34" avec des directions de mesure parallèles à l'axe Y, décalées selon l'axe Z.

Selon des deuxième et troisième modes de réalisation visibles sur les figures 5 et 6, le support 32 comprend une plaque plane avec deux capteurs de mesure 34, 34', un premier capteur de mesure 34 avec une direction de mesure parallèle à l'axe Z et un second capteur de mesure 34' avec une direction de mesure parallèle à l'axe Y.

Selon des quatrième et cinquième modes de réalisation visibles sur le figures 7 et 8, le support 32 comprend une plaque pliée en L dont l'une des ailes supporte un capteur de mesure 34 avec une direction de mesure parallèle à l'axe Z.

Selon un sixième mode de réalisation visible sur la figure 9, le support 32 comprend une plaque plane en forme de cadre avec deux capteurs de mesure 34, 34', un premier capteur de mesure 34 avec une direction de mesure parallèle à l'axe Z et un second capteur de mesure 34' avec une direction de mesure parallèle à l'axe Y.

Avantageusement, comme illustré sur la figure 4, chaque outil de réglage 18 comprend une interface homme machine de restitution 38 configurée pour restituer les valeurs mesurées par chaque capteur de mesure 34 de l'outil de réglage 18, tel qu'un écran ou des haut-parleurs par exemples. Une telle interface 38 est configurée pour restituer la ou les valeurs de réglage déterminées pour l'élément structurel 14 donné. Lorsqu'une telle interface 38 est un écran, ce dernier affiche la ou les valeurs de réglages déterminées.

Selon une autre caractéristique, l'outil de réglage 18 comprend un calculateur permettant de comparer les valeurs mesurées par chaque capteur de mesure 34 aux valeurs de réglage déterminées et de déduire des actions correctives à effectuer pour finaliser le réglage de l'élément structurel 14. Les actions correctives sont à titre d'exemple des translations de l'élément structurel selon une direction donnée d'une distance donnée et/ou des rotations de l'élément structurel autour d'un axe de rotation donné d'un angle donné. De telles actions correctives peuvent dès lors être restituées par l'interface homme-machine de restitution 38. Selon une autre caractéristique, l'outil de réglage 18 comprend un système de communication 40 pour échanger des informations avec un ordinateur distant, comme l'ordinateur 31 destiné au stockage et à la gestion de la troisième base de données 28. Ainsi, un rapport des opérations de réglage peut être transmis par le système de communication 40 à l'ordinateur 31 pour y être stocké, après avoir été élaboré par l'outil de réglage 18. Le système de communication 40 permet en outre de communiquer entre l'outil de réglage 18 et l'outil de mesure 16 et transmettre, à titre d'exemple, les valeurs de réglages déterminées par l'outil de mesure 16.

Selon un mode de réalisation, l'outil de réglage 18 comprend un ordinateur de poche 42 de type PDA (acronyme anglais de Personal digital assistant) qui intègre l'écran 38, le calculateur et le système de communication 40. Cet ordinateur de poche 42 est de préférence relié par au moins une liaison filaire 44 aux capteurs de mesure 34, 34', 34".

Lors de la troisième étape de réglage de chaque élément structurel 14, chaque opérateur fixe un outil de réglage 18 à proximité de l'élément structurel 14. L'écran 38 de l'outil de réglage 18 indique à l'opérateur les valeurs de réglage déterminées en fonction de la comparaison entre les valeurs de la position théorique et les valeurs de la position réelle mesurées avec l'outil de mesure 16. En variante, l'écran 38 peut indiquer à l'opérateur des actions correctives, telles que définies précédemment.

L'opérateur modifie la position réelle de l'élément structurel 14 jusqu'à ce que les valeurs mesurées par les capteurs de mesure 34 de l'outil soient conformes aux valeurs de réglage. Dès que les valeurs mesurées par les capteurs de mesure 34 de l'outil sont égales aux valeurs de réglage, l'élément structurel est correctement positionné. A l'issue du réglage, l'outil de réglage 18 via le système de communication 40 peut transmettre à l'ordinateur 31 un rapport de réglage stocké dans une base de données.

L'opérateur peut alors démonter l'outil de réglage 18 et installer le même outil de réglage ou un autre outil de réglage à proximité d'un autre élément structurel.

Selon l'invention, plusieurs opérateurs peuvent intervenir simultanément et régler chacun un élément structurel 14. Ainsi, il est possible de régler l'ensemble des éléments structurels en 3 ou 4 heures. L'utilisation de la photogrammétrie lors de la première étape de mesure permet de s'affranchir des contraintes vibratoires de l'art antérieur et d'augmenter ainsi le nombre d'opérateurs présents dans la zone de travail.

Selon une variante de l'invention, la modification de la position réelle de l'élément structurel 14 peut être automatisée. Le dispositif de réglage peut dès lors transmettre la ou les valeurs de réglage déterminées et/ou la ou les actions correctives déterminées pour l'élément structurel 14 donné, à des moyens de positionnement automatisés ou actionneurs connus de l'homme du métier, tels qu'à titre d'exemples non limitatifs des robots automatisés pour déplacer, soulever et/ou changer l'orientation d'un élément structurel (14).

## Revendications

1. Dispositif de réglage du positionnement d'éléments structurels (14) d'une structure (12) d'un aéronef comportant :
- un outil de mesure (16) par photogrammétrie configuré pour mesurer des positions réelles des éléments structurels (14) comprenant :
∘ au moins un couple d'appareils de prise de vue (20.1, 20.2) configurés pour capturer une prise de vue des éléments structurels (14) ;
∘ un système d'analyse (24) des vues prises par l'au moins un couple d'appareils de prise de vue (20.1, 20.2) configuré pour déterminer à partir des vues capturées par les appareils de prise de vue (20.1, 20.2) une valeur de la position réelle de chaque élément structurel (14) ;
- un système de traitement et de calcul (30) configuré pour comparer chaque valeur de la position réelle déterminée par le système d'analyse (24) à une valeur théorique correspondante et en déduire une valeur de réglage ;
- un outil de réglage (18) configuré pour être fixé en utilisation à la structure (12), comprenant :
∘ au moins un support (32),
∘ au moins un capteur de mesure (34) fixé sur le support (32) et configuré pour mesurer une variation d'une distance séparant ledit capteur de mesure (34) de l'élément structurel (14),
∘ un système de liaison démontable (36) configuré pour relier ledit support (32) à la structure (12) de façon à ce que ledit capteur de mesure (34) pointe en direction de l'élément structurel (14), et
∘ un calculateur configuré pour comparer la valeur mesurée par le capteur de mesure (34) à la valeur de réglage correspondante et en déduire des actions correctives pour finaliser le réglage de l'élément structurel (14).

2. Dispositif selon la revendication 1, **caractérisé en ce que** le dispositif comprend des moyens de positionnement automatisés.

3. Dispositif selon l'une quelconque des revendications 1 à 2 **caractérisé en ce que** le dispositif comporte une interface homme-machine de restitution (38) configurée pour restituer la valeur de réglage.

4. Dispositif selon la revendication précédente **caractérisé en ce que** l'interface homme-machine de restitution (38) est un écran.

5. Dispositif selon l'une quelconque des revendications 1 à 4, **caractérisé en ce que** l'outil de mesure (16) comporte un ordinateur (31) assurant la fonction du système d'analyse (24) et du système de traitement et de calcul (30).

6. Dispositif selon l'une quelconque des revendications 1 à 5, **caractérisé en ce que** l'outil de mesure (16) comporte deux couples d'appareils de prise de vue (20.1, 20.2).

7. Dispositif selon l'une quelconque des revendications 1 à 6 **caractérisé en ce que** le capteur de mesure (34) est un capteur opto-électrique.

8. Procédé de réglage du positionnement d'éléments structurels (14) d'une structure (12) d'un aéronef mis en oeuvre par un dispositif selon l'une quelconque des revendications 1 à 7, **caractérisé en ce que** le procédé comprend les étapes suivantes :
- détermination d'une valeur de la position réelle d'éléments structurels (14) de la structure (12) d'aéronef par l'outil de mesure (16) ;
- détermination d'au moins une valeur de réglage à partir de la valeur de la position réelle préalablement déterminée et d'une position théorique d'un élément structurel (14) par le système de traitement et de calcul (30) ;
- mesure, par l'outil de réglage, d'une variation d'une distance séparant un capteur de mesure (34) de l'élément structurel (14) et comparer sa valeur à la valeur de réglage et déduire des actions correctives jusqu'à ce que les valeurs mesurées par le ou les capteur(s) de mesure (34) soient conformes aux valeurs de réglages déterminées.

9. Procédé selon la revendication précédente, **caractérisé en ce que** le procédé comporte une étape de transmission des valeurs de réglages à des moyens de positionnement automatisés.

10. Procédé selon les revendications 8 ou 9, **caractérisé en ce que** le procédé comporte une étape d'élaboration d'un rapport des opérations de réglages lorsque les valeurs mesurées par le ou les capteur(s) de mesure (34) sont conformes aux valeurs de réglages déterminées.

11. Procédé selon l'une quelconque des revendications 8 à 10, **caractérisé en ce que** le procédé comporte une étape de restitution de la valeur de réglage et/ou le rapport des opérations de réglages par une interface homme-machine de restitution (38).

## Patentansprüche

1. Vorrichtung für die Regulierung der Positionierung von Strukturelementen (14) einer Struktur (12) eines Flugzeugs, die Folgendes umfasst:
- ein Photogrammetrie-Messwerkzeug (16), das konfiguriert ist, die wirklichen Positionen von Strukturelementen (14) zu messen, und das Folgendes umfasst:
∘ wenigstens ein Paar Aufnahmegeräte (20.1, 20.2), die konfiguriert sind, eine Aufnahme der Strukturelemente (14) zu machen;
∘ ein Analysesystem (24) für die Aufnahmen durch wenigstens ein Paar Aufnahmegeräte (20.1, 20.2), das konfiguriert ist, anhand der durch die Aufnahmegeräte (20.1, 20.2) gemachten Aufnahmen einen Wert der wirklichen Position jedes Strukturelements (14) zu bestimmen;
- ein Verarbeitungs- und Rechensystem (30), das konfiguriert ist, jeden durch das Analysesystem (24) bestimmten Wert der wirklichen Position mit einem entsprechenden theoretischen Wert zu vergleichen und daraus einen Regulierungswert abzuleiten;
- ein Regulierungswerkzeug (18), das konfiguriert ist, im Gebrauch an der Struktur (12) befestigt zu werden, und das Folgendes umfasst:
∘ wenigstens einen Träger (32),
∘ wenigstens einen Messsensor (34), der an dem Träger (32) befestigt ist und konfiguriert ist, eine Veränderung eines Abstands, der den Messsensor (34) von dem Strukturelement (14) trennt, zu messen,
∘ ein demontierbares Verbindungssystem (36), das konfiguriert ist, den Träger (32) mit der Struktur (12) in der Weise zu verbinden, dass der Messsensor (34) in Richtung des Strukturelements (14) zeigt, und
∘ eine Recheneinrichtung, die konfiguriert ist, den durch den Messsensor (34) gemessenen Wert mit dem entsprechenden Regulierungswert zu vergleichen und daraus Korrektureingriffe abzuleiten, um die Regulierung des Strukturelements (14) abzuschließen.

2. Vorrichtung nach Anspruch 1, **dadurch gekennzeichnet, dass** die Vorrichtung automatisierte Positionierungsmittel umfasst.

3. Vorrichtung nach einem der Ansprüche 1 bis 2, **dadurch gekennzeichnet, dass** die Vorrichtung eine Auswertungs-Mensch/Maschinen-Schnittstelle (38) umfasst, die konfiguriert ist, den Regulierungswert auszuwerten.

4. Vorrichtung nach dem vorhergehenden Anspruch, **dadurch gekennzeichnet, dass** die Auswertungs-Mensch/Maschinen-Schnittstelle (38) ein Bildschirm ist.

5. Vorrichtung nach einem der Ansprüche 1 bis 4, **dadurch gekennzeichnet, dass** das Messwerkzeug (16) einen Computer (31) umfasst, der die Funktion des Analysesystems (24) und des Verarbeitungs- und Rechensystems (30) gewährleistet.

6. Vorrichtung nach einem der Ansprüche 1 bis 5, **dadurch gekennzeichnet, dass** das Messwerkzeug (16) zwei Paare Aufnahmegeräte (20.1, 20.2) umfasst.

7. Vorrichtung nach einem der Ansprüche 1 bis 6, **dadurch gekennzeichnet, dass** der Messsensor (34) ein optisch-elektrischer Sensor ist.

8. Verfahren zum Regulieren der Positionierung von Strukturelementen (14) einer Struktur (12) eines Flugzeugs, das durch eine Vorrichtung nach einem der Ansprüche 1 bis 7 ausgeführt wird, **dadurch gekennzeichnet, dass** das Verfahren die folgenden Schritte umfasst:
- Bestimmen eines Wertes der wirklichen Position von Strukturelementen (14) der Flugzeugstruktur (12) durch das Messwerkzeug (16);
- Bestimmen wenigstens eines Regulierungswertes anhand des vorher bestimmten Wertes der wirklichen Position und einer theoretischen Position eines Strukturelements (14) durch das Verarbeitungs- und Rechensystem (30);
- Messen durch das Regulierungswerkzeug einer Veränderung eines Abstands, der einen Messsensor (34) von dem Strukturelement (14) trennt, und Vergleichen seines Wertes mit dem Regulierungswert und daraus Ableiten von Korrekturmaßnahmen, bis die durch den einen oder die mehreren Messsensoren (34) gemessenen Werte mit den bestimmten Regulierungswerten übereinstimmen.

9. Verfahren nach dem vorhergehenden Anspruch, **dadurch gekennzeichnet, dass** das Verfahren einen Schritt des Übertragens der Regulierungswerte an automatisierte Positionierungsmittel umfasst.

10. Verfahren nach den Ansprüchen 8 oder 9, **dadurch gekennzeichnet, dass** das Verfahren einen Schritt des Erzeugens eines Berichts über Regulierungsoperationen umfasst, wenn die durch den einen oder die mehreren Messsensoren (34) gemessenen Werte mit den bestimmten Regulierungswerten übereinstimmen.

11. Verfahren nach einem der Ansprüche 8 bis 10, **dadurch gekennzeichnet, dass** das Verfahren einen Schritt des Auswertens des Regulierungswertes und/oder des Berichts der Regulierungsoperationen durch eine Auswertungs-Mensch/Maschinen-Schnittstelle (38) umfasst.

## Claims

1. Device for adjusting the position of structural elements (14) of a structure (12) of an aircraft, comprising:
- a tool (16) for measuring by photogrammetry that is configured to measure actual positions of the structural elements (14) comprising:
∘ at least one pair of imaging devices (20.1, 20.2) that are configured to capture an image of the structural elements (14);
∘ a system (24) for analysing the images taken by the at least one pair of imaging devices (20.1, 20.2) that is configured to determine, from the images captured by the imaging devices (20.1, 20.2), a value for the actual position of each structural element (14);
- a processing and calculation system (30) that is configured to compare each value of the actual position determined by the analysis system (24) with a corresponding theoretical value, and to determine therefrom an adjustment value;
- an adjustment tool (18) that is configured to be attached in use to the structure (12), comprising:
∘ at least one support (32),
∘ at least one measurement sensor (34) that is attached to the support (32) and is configured to measure a variation in a distance between said measurement sensor (34) and the structural element (14),
∘ a removable connection system (36) that is configured to connect said support (32) to the structure (12) in such a way that said measurement sensor (34) points toward the structural element (14), and
∘ a calculator that is configured to compare the value measured by the measurement sensor (34) with the corresponding adjustment value, and to derive therefrom corrective actions to finalize adjustment of the structural element (14).

2. Device according to Claim 1, **characterized in that** the device comprises automated positioning means.

3. Device according to either one of Claims 1 and 2, **characterized in that** the device comprises a man-machine output interface (38) that is configured to output the adjustment value.

4. Device according to the preceding claim, **characterized in that** the man-machine output interface (38) is a screen.

5. Device according to any one of Claims 1 to 4, **characterized in that** the measurement tool (16) comprises a computer (31) acting as the analysis system (24) and the processing and calculation system (30).

6. Device according to any one of Claims 1 to 5, **characterized in that** the measurement tool (16) comprises two pairs of imaging devices (20.1, 20.2) .

7. Device according to any one of Claims 1 to 6, **characterized in that** the measurement sensor (34) is an opto-electrical sensor.

8. Method for adjusting the position of structural elements (14) of a structure (12) of an aircraft, implemented by a device according to any one of Claims 1 to 7, **characterized in that** the method comprises the following steps:
- determining a value for the actual position of structural elements (14) of the aircraft structure (12) by means of the measurement tool (16) ;
- determining at least one adjustment value on the basis of the previously determined value of the actual position and a theoretical position of a structural element (14), by means of the processing and calculation system (30);
- measuring, by means of the adjustment tool, a variation in a distance between a measurement sensor (34) and the structural element (14), and comparing this value with the adjustment value, and deriving corrective actions until the values measured by the measurement sensor(s) (34) match the determined adjustment values.

9. Method according to the preceding claim, **characterized in that** the method comprises a step of sending the adjustment values to automated positioning means.

10. Method according to Claim 8 or 9, **characterized in that** the method comprises a step of drawing up a report of the adjustment operations when the values measured by the measurement sensor(s) (34) match the determined adjustment values.

11. Method according to any one of Claims 8 to 10, **characterized in that** the method comprises a step of outputting the adjustment value and/or the report of the adjustment operations by means of a man-machine output interface (38).
